# EUROPÄISCHE PATENTSCHRIFT

(11) **EP 4 117 913 B1**
(45) Veröffentlichungstag und Bekanntmachung des Hinweises auf die Patenterteilung: **20.12.2023**
(21) Anmeldenummer: 21706610.9
(22) Anmeldetag: 24.02.2021
(51) Int. Cl.: B32B 17/10, B60R 1/00

(54) **VERBUNDSCHEIBE MIT PHOTOPOLYMERSCHICHT UND PDLC-ELEMENT**
LAMINATED GLASS WITH PHOTOPOLYMER LAYER AND PDLC ELEMENT
VITRE COMPOSITE POURVUE DE COUCHE PHOTOPOLYMÈRE ET D'ÉLÉMENT PDLC

(30) Priorität: 13.03.2020 EP 20162882
(43) Veröffentlichungstag der Anmeldung: 18.01.2023
(73) Patentinhaber: Saint-Gobain Glass France, 92400 Courbevoie (FR)
(72) Erfinder: GOMER, Andreas, 50170 Kerpen (DE); RODERBURG, Andreas, 52080 Aachen (DE); ZHANG, Huixing, 52062 Aachen (DE)
(74) Vertreter: Gebauer, Dieter Edmund
(86) Internationale Anmeldenummer: PCT/EP2021/054526
(87) Internationale Veröffentlichungsnummer: WO 2021/180471

(56) Entgegenhaltungen:
- WO-A1-2018/188844
- DE-A1-102019 108 385
- DE-U1-202019 104 803
- US-A1- 2019 101 865

## Beschreibung

Die Erfindung betrifft eine Verbundscheibe mit Funktionselementen mit elektrisch steuerbaren optischen Eigenschaften und holographischen Displayelementen, ein Verfahren zum Erzeugen einer visuellen Information mit der Verbundscheibe, die Verwendung der Verbundscheibe sowie ein Fahrzeug oder ein Bauwerk, in das die Verbundscheibe eingebaut ist.

Verbundscheiben mit elektrisch steuerbaren optischen Funktionselementen sind als solche bekannt. Die optischen Eigenschaften der Funktionselemente können durch eine angelegte elektrische Spannung verändert werden.

Ein Beispiel für solche Funktionselemente sind SPD-Funktionselemente (SPD = suspended particle device). Durch die angelegte Spannung lässt sich die Transmission von sichtbarem Licht durch SPD-Funktionselemente steuern.

Ein weiteres Beispiel sind PDLC-Funktionselemente (PDLC = polymer dispersed liquid crystal). Die aktive Schicht enthält dabei Flüssigkristalle, welche in einer Polymermatrix eingelagert sind.

Ein weiteres Beispiel sind PNLC-Funktionselemente (PNLC = polymer network liquid crystal). Die aktive Schicht enthält dabei Flüssigkristalle, welche in ein Polymernetzwerk eingelagert sind, wobei die Funktionsweise ansonsten analog wie bei den PDLC-Funktionselementen ist.

SPD-, PDLC und PNLC-Funktionselemente sind als Funktionselement kommerziell erhältlich, wobei die aktive Schicht und die zum Anlegen einer Spannung erforderlichen Flächenelektroden zwischen zwei Trägerfolien angeordnet sind.

CN 209195228 U beschreibt den Einsatz von laminiertem PDLC-Glas als Projektionsschirm für Kraftfahrzeuge. WO 2018/86400 A1 betrifft laminiertes PDLC-Glas für U-Bahn-Tür-Multimediasysteme.

Ebenfalls bekannt sind holographische Displayelemente, die in sogenannten Head-up-Displays als Projektionsfläche eingesetzt werden. Ein Head-up-Display ist ein Anzeigesystem, bei dem der Betrachter seine Blickrichtung beibehalten kann, weil die visuellen Informationen in sein Sichtfeld projiziert werden. Zu den Nutzern gehören unter anderem Piloten und Autofahrer.

US 2019/0101865 A1 beschreibt ein Verfahren zur Herstellung eines laminierten holographischen Displays, bei der eine Photopolymerschicht mithilfe von Polymerschichten zwischen zwei Glasscheiben laminiert wird. DE 10 2019 108385 A1 offenbart eine Verbundscheibe, umfassend in dieser Reihenfolge eine Außenscheibe, eine Zwischenschicht, ein Displayelement, welches ein holographisches Displayelement sein kann, eine Zwischenschicht und eine Innenscheibe.

Beim Einsatz von Head-up-Displays ergeben sich jedoch spezifische Probleme. So sind die Anforderungen an Projektoren, die die Bilder für Head-up-Displays erzeugen, hoch, um einen hohen Kontrast bereitzustellen, so dass relativ großvolumige Projektoren eigesetzt werden müssen, die aufgrund des hohen Stromverbrauchs auch relativ viel Wärme produzieren.

Darüber hinaus ist es bei Head-up-Displays schwierig, die Privatsphäre der Benutzer zu schützen, da die eingesetzten Projektionsflächen von beiden Seiten durchsichtig sind. Zudem ist auf die Sicherheit der Fußgänger durch Vermeidung von Blendung zu achten. Die Aufgabe der Erfindung bestand darin, den hohen Anforderungen an den Kontrast von Bildern, die auf oder hinter Glas erzeugt werden, bei verringerten Anforderungen an den Projektor gerecht zu werden. Darüber hinaus soll die Privatsphäre der Nutzer besser geschützt werden.

Die Aufgabe der vorliegenden Erfindung wird durch eine Verbundscheibe gemäß dem unabhängigen Anspruch 1 gelöst. Die Erfindung betrifft auch ein Verfahren zur Erzeugung von visueller Information mithilfe der Verbundscheibe, die Verwendung der Verbundscheibe sowie die erfindungsgemäßen Verbundscheiben, die in Bauwerke oder Fahrzeuge montiert sind, gemäß den weiteren unabhängigen Ansprüchen. Bevorzugte Ausführungen gehen aus den Unteransprüchen hervor.

Die vorgestellte Erfindung löst das Problem der hohen Anforderung an den Kontrast von Bildern, die auf oder hinter dem Glas erzeugt werden, durch die Anwendung des Holographie-Prinzips in Kombination mit speziellen Funktionselementen, insbesondere PDLC, mit denen die optischen Eigenschaften der Scheibe gesteuert werden können. Dadurch wird ein höherer Kontrast für das erzeugte Bild erreicht, insbesondere, wenn mithilfe des Funktionselement die Transparenz der Verbundscheibe reduziert wird. Die erforderliche Projektorleistung wird dadurch drastisch reduziert, was auch zu einer Verkleinerung des Projektors führen kann und somit den Einsatz auf begrenztem Raum, z.B. in Autos, ermöglicht. Da eine geringere Lichtmenge erforderlich ist, wird auch weniger Wärme erzeugt.

Darüber hinaus ermöglicht die Erfindung den Schutz der Privatsphäre der Benutzer von holographischen Bildanzeigen. Durch das Einstellen der optischen Eigenschaft der Scheibe durch das Funktionselement, insbesondere des PDLC, können Fußgänger außerhalb des Fahrzeugs die auf dem Glas angezeigten Bilder nicht sehen. Schließlich vermeidet die Kombination von PDLC und holographischem Film die Blendung von Fußgängern, die durch durchgelassene Laser- oder Lichtstrahlen des Hologramms verursacht werden können.

Diese Erfindung stellt eine Kombination aus PDLC-Film und holografischem Film dar, die in Glas laminiert werden. Die Kombination beider Materialstapel ermöglicht eine Sichtschutzfunktion für Display-Anwendungen, die auf dem Holographie-Prinzip basieren, wenn die PDLC-Schicht aktiviert wird und somit die Menge des durchgelassenen Lichts reduziert wird. Dies hilft, diffuse Reflexionen des holographischen Materials für Anwendungen wie z.B. transparente Bildschirme zu nutzen, die für Personen außerhalb des Autos nicht sichtbar sind. Darüber hinaus erhöht ein schaltbarer Hintergrund, wie z.B. die PDLC, den Kontrast des vom Hologramm erzeugten Bildes. Dies trägt dazu bei, dass die Anforderungen an den Projektor reduziert und/oder der sichtbare Bereich vergrößert werden kann.

Die erfindungsgemäße Verbundscheibe eignet sich als Projektionsfläche für Head-up-Displays (HUD).

Die Erfindung wird im Folgenden näher erläutert. Die folgenden Angaben werden bezüglich der erfindungsgemäßen Verbundscheibe oder des erfindungsgemäßen Verfahrens oder der erfindungsgemäßen Verwendung oder den erfindungsgemäßen Fahrzeugen oder Bauwerken gemacht, beziehen sich soweit anwendbar aber immer sowohl auf die Verbundscheibe selbst, das Verfahren, die Verwendung sowie die Fahrzeuge oder Bauwerke, in die die Verbundscheibe eingebaut ist, sofern nicht ausdrücklich anders angegeben.

Gemäß der Erfindung wird eine Verbundscheibe bereitgestellt, die in dieser Reihenfolge umfasst: eine Außenscheibe 1, eine Zwischenschicht 11, ein Funktionselement 4 mit elektrisch steuerbaren optischen Eigenschaften, das ausgewählt ist aus einem PDLC-Funktionselement, einem PNLC-Funktionselement oder einem SPD-Funktionselement, eine Zwischenschicht 11, ein holographisches Displayelement 3, eine Zwischenschicht 11 und eine Innenscheibe 2.

Die Verbundscheibe umfasst eine Innenscheibe und eine Außenscheibe. Die Innenscheibe und die Außenscheibe können flache oder gebogene Scheiben sein. Die Scheiben können aus anorganischem Glas und/oder organischem Glas (Kunststoff) sein. Die Innenscheibe und die Außenscheibe können z.B. unabhängig voneinander aus Flachglas, Quarzglas, Borosilikatglas, Kalk-Natron-Glas, Aluminosilikatglas, Polycarbonat und/oder Polymethacrylat sein. Die Innenscheibe und die Außenscheibe sind bevorzugt aus Kalk-Natron-Glas. Die Innenscheibe und die Außenscheibe weisen z.B. unabhängig voneinander eine Dicke im Bereich von 0,4 bis 5,0 mm, z.B. 1 bis 3 mm, bevorzugter 1,6 bis 2,5 mm, auf.

Die Innenscheibe und/oder die Außenscheibe können weitere geeignete, an sich bekannte Beschichtungen aufweisen, z.B. Antihaftbeschichtungen, getönte Beschichtungen, Antireflexbeschichtungen, Antikratzbeschichtungen oder Low-E-Beschichtungen. Die Innenscheibe und die Außenscheibe können farbig oder farblos (weiß) ausgestaltet sein. In einer Ausführungsform ist die Außenscheibe z.B. eine grüne Scheibe. Die Innenscheibe ist z.B. eine weiße Scheibe, d.h. eine farblose Scheibe.

Bei dem Funktionselement und dem holographischen Displayelement handelt es sich um Flächenkörper, die auch als Funktionsschicht bzw. holographische Displayschicht bezeichnet werden können. Die in der Verbundscheibe enthaltenen polymeren Schichten werden in der Regel durch Folien gebildet. Die Ausdrücke Schichten und Folien werden miteinander austauschbar verwendet.

Die erfindungsgemäße Verbundscheibe umfasst ein Funktionselement mit elektrisch steuerbaren optischen Eigenschaften, das ausgewählt ist aus einem PDLC-Funktionselement, einem PNLC-Funktionselement oder einem SPD-Funktionselement. In einer bevorzugten Ausführungsform ist das Funktionselement mit elektrisch steuerbaren optischen Eigenschaften ein PDLC-Funktionselement.

Solche Funktionselemente und deren Funktionsweise sind dem Fachmann an sich bekannt. Durch das Funktionselement, insbesondere das PDLC-Funktionselement, kann die Lichtdurchlässigkeit der Verbundscheibe nach Bedarf reduziert werden, wodurch ein Sichtschutzeffekt erzielt wird und der Kontrast für die visuelle Information erhöht wird.

Das Funktionselement, insbesondere das PDLC-Funktionselement, umfasst im Allgemeinen in dieser Reihenfolge eine Trägerschicht, eine Flächenelektrode, eine aktive Schicht, eine Flächenelektrode und eine Trägerschicht.

Die aktive Schicht weist veränderliche optische Eigenschaften auf, die durch eine an die aktive Schicht angelegte elektrische Spannung gesteuert werden können. Unter elektrisch steuerbaren optischen Eigenschaften werden im Sinne der Erfindung insbesondere solche Eigenschaften verstanden, die stufenlos steuerbar sind, aber gleichermaßen auch solche, die zwischen zwei oder mehr diskreten Zuständen geschaltet werden können. Die besagten optischen Eigenschaften betreffen insbesondere die Lichttransmission und/oder das Streuverhalten.

Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht.

Die aktive Schicht eines PNLC-Funktionselements enthält Flüssigkristalle, welche in ein Polymernetzwerk eingelagert sind. Ansonsten ist das Funktionsprinzip ähnlich wie bei dem PDLC-Funktionselement. Die aktive Schicht eines SPD-Funktionselements enthält suspendierte Partikel, wobei die Absorption von Licht durch die aktive Schicht mittels Anlegen einer Spannung an die Flächenelektroden veränderbar ist.

Das Funktionselement umfasst Flächenelektroden zum Anlegen der Spannung an die aktive Schicht, die zwischen den Trägerschichten und der aktiven Schicht angeordnet sind. Eine Flächenelektrode ist zwischen der aktiven Schicht und der einen Trägerschicht angeordnet und eine Flächenelektrode ist zwischen der aktiven Schicht und der anderen Trägerschicht angeordnet. Die Flächenelektroden können bzgl. Zusammensetzung und/oder Dicke gleich oder verschieden sein. Die Flächenelektroden sind meist gleich.

Die Flächenelektroden sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (transparent conducting oxide, TCO). Beispiele für transparente, leitende Oxide (TCO) sind mit Zinn dotiertes Indiumoxid (ITO, auch als Indium-Zinn-Oxid bezeichnet), mit Antimon oder Fluor dotiertes Zinnoxid (SnO₂:F), mit Gallium dotiertes Zinkoxid oder mit Aluminium dotiertes Zinkoxid (ZnO: AI), wobei ITO bevorzugt ist. Die Dicke der elektrisch leitenden Schichten auf Basis dieser transparenten leitenden Oxide (TCO) liegt bevorzugt im Bereich von 10 nm bis 2 µm, bevorzugter 30 nm bis 500 nm und insbesondere 30 nm bis 400 nm.

Die elektrisch leitfähige Schicht kann auch eine Metallschicht sein, vorzugsweise eine Dünnschicht oder ein Stapel von Dünnschichten, die Metallschichten umfassen. Metall umfasst hier auch Metalllegierungen. Geeignete Metalle sind z.B. Ag, Al, Pd, Cu, Pd, Pt, In, Mo, Au, Ni, Cr, W oder Legierungen davon. Diese Metallbeschichtungen werden als TCC (transparent conductive coating) bezeichnet. Typische Dicken der Einzelschichten liegen im Bereich von 2 bis 50 nm.

Typischerweise sind die Flächenelektroden in Form einer elektrisch leitfähigen Beschichtung auf der Trägerfolie bzw. Trägerschicht ausgebildet. Die Flächenelektroden weisen bevorzugt eine Dicke im Bereich von 30 bis 400 nm auf.

Die Funktionselemente umfassen ferner zwei Trägerschichten bzw. Trägerfolien (eine erste Trägerschicht und eine zweite Trägerschicht). Die Trägerschichten sind insbesondere aus polymeren oder thermoplastischen Folien gebildet. Die Trägerschichten können bzgl. Zusammensetzung und/oder Dicke gleich oder verschieden sein. Typischerweise bestehen die beiden Trägerschichten aus derselben Zusammensetzung.

Die Trägerschichten enthalten insbesondere ein thermoplastisches Material oder bestehen daraus. Das thermoplastische Material kann ein thermoplastisches Polymer oder eine Mischung von zwei oder mehr thermoplastischen Polymeren sein. Neben dem thermoplastischen Material kann die Trägerschicht ferner Zusätze enthalten, wie z.B. Weichmacher. Das thermoplastische Material der Trägerschichten ist bevorzugt Polyethylenterephthalat (PET), wie es bei kommerziell erhältlichen Funktionselementen üblich ist. Die Trägerschichten werden daher bevorzugt aus PET-Folie gebildet.

Das thermoplastische Material der Trägerschicht kann auch Mischungen von PET mit anderen thermoplastischen Polymeren und/oder Copolymere von PET enthalten oder daraus bestehen. Das thermoplastische Material der Trägerfolie kann z.B. auch PU, Polypropylen, Polycarbonat, Polymethylmethacrylat, Polyacrylat, Polyvinylchlorid, Polyacetatharz, fluorinierte Ethylen-Propylene, Polyvinylfluorid und/oder Ethylen-Tetrafluorethylen enthalten oder daraus bestehen.

Die Dicke jeder Trägerschicht liegt z.B. im Bereich von 0,03 mm bis 0,4 mm, bevorzugt von 0,04 mm bis 0,2 mm. Die Dicke der Trägerschichten liegt bevorzugt im Bereich von 100 bis 200 µm.

In einer bevorzugten Ausführungsform sind in dem Funktionselement, bevorzugt in dem PDLC-Funktionselement, die Trägerschichten aus PET-Folie gebildet, und/oder die Flächenelektroden aus ITO-Schichten gebildet.

In einer bevorzugten Ausführungsform weisen in dem Funktionselement, bevorzugt in dem PDLC-Funktionselement, die Trägerschichten jeweils unabhängig eine Dicke im Bereich von 100 bis 200 µm, die Flächenelektroden jeweils unabhängig eine Dicke im Bereich von 30 bis 400 nm und/oder die aktive Schicht eine Dicke im Bereich von 10 bis 30 µm auf.

Die erfindungsgemäße Verbundscheibe umfasst ferner ein holographisches Displayelement. Solche holographischen Displayelemente und deren Funktionsweise sind dem Fachmann an sich bekannt. Beispielsweise kann Bayfol^{®} HX von Covestro für das holografische Displayelement eingesetzt werden. Ein holografisches Displayelement ist dafür ausgelegt, ein Hologramm anzuzeigen, das vom Betrachter gesehen werden kann. Zur Aufzeichnung wird die Photopolymerschicht des holographischen Displayelements mit einer bildgebenden Einheit, auch als Projektor bezeichnet, belichtet, wodurch ein Hologramm als visuelle Information in der Photopolymerschicht bereitgestellt wird.

Das holographische Displayelement umfasst eine Photopolymerschicht, die zwischen einer Deckschicht und einer Substratschicht angeordnet ist.

Die Photopolymerschicht enthält Photopolymere oder holographische Photopolymere. Photopolymere sind allgemein Materialien, die bei Einwirken von Licht mit einer chemischen Reaktion reagieren. Holographische Photopolymere zeichnen ein Interferenzmuster auf und zeigen so die chemische Bildung von Beugungsgittern. Sie können z.B. aus einem vernetzten Matrixsystem mit darin eingebauten bildgebenden Komponenten gebildet werden. Häufig sind Polyacrylatverbindungen in solchen Photopolymerschichten enthalten.

Die Substratschicht des holographischen Displayelements kann z.B. aus Polyamid (PA)-Folie oder Cellulosetriacetat (TAC)-Folie gebildet sein. Die Deckschicht des holographischen Displayelements kann z.B. aus Polyamid (PA)-Folie, Cellulosetriacetat (TAC)-Folie, Polymethylmethacrylat (PMMA)-Folie oder Polyethylenterephthalat (PET)-Folie gebildet sein.

Das holographische Displayelement kann in der Verbundscheibe zweckmäßigerweise so angeordnet sein, dass die Substratschicht zwischen der Innenscheibe und der Photopolymerschicht angeordnet ist. Es ist aber auch möglich, dass das holographische Displayelement so angeordnet ist, dass die Deckschicht zwischen der Innenscheibe und der Photopolymerschicht angeordnet ist. Es ist dabei aber zu beachten, dass zwischen der Innenscheibe und der Photopolymerschicht keine doppelbrechende Schicht angeordnet werden darf. Beispielsweise ist PMMA ein doppelbrechendes Material. Wenn für die Deckschicht ein doppelbrechendes Material wie PMMA eingesetzt wird, dann kann die Deckschicht nicht zwischen der Innenscheibe und der Photopolymerschicht angeordnet werden.

In dem holographischen Displayelement kann die Substratschicht z.B. eine Dicke im Bereich von 50 bis 200 µm aufweisen. Die Photopolymerschicht kann z.B. eine Dicke im Bereich von 10 bis 80 µm aufweisen Die Deckschicht kann z.B. eine Dicke im Bereich von 50 bis 250 µm aufweisen.

Die erfindungsgemäße Verbundscheibe umfasst ferner drei Zwischenschichten. Es können auch mehr Zwischenschichten enthalten sein. Die Zwischenschichten können bzgl. Zusammensetzung und/oder Dicke gleich oder verschieden sein. Die Zwischenschichten können durch handelsübliche Laminierfolien gebildet werden. Sie dienen zur Verklebung bzw. Laminierung der Komponenten der Verbundscheibe. Durch die Zwischenschichten werden Innenscheibe und Außenscheibe miteinander verbunden und das Funktionselement und das holographische Displayelement in das Glas laminiert,

Die Zwischenschichten werden insbesondere aus polymeren Folien, in der Regel thermoplastischen Folien gebildet. Die Zwischenschicht kann z.B. Polyvinylbutyral (PVB), Ethylenvinylacetat, Polyurethan, Polypropylen, Polyacrylat, Polyethylen, Polycarbonat, Polymethylmetacrylat, Polyvinylchlorid, Polyacetatharz, Gießharz, Acrylat, fluoriniertes Ethylen-Propylen, Polyvinylfluorid und/oder Ethylen-Tetrafluorethylen und/oder ein Gemisch und/oder ein Copolymer davon enthalten.

In einer bevorzugten Ausführungsform sind die Zwischenschichten jeweils unabhängig gebildet aus Polyvinylbutyral (PVB)-Folie, thermoplastischer Polyurethan (TPU)-Folie, Ethylen-Vinylacetat-Copolymer (EVA)-Folie, OCA-Folie oder einer Kombination davon.

In einer bevorzugten Ausführungsform sind die Zwischenschichten aus PVB-Folien gebildet. OCA ist die Abkürzung für "Optical Clear Adhesive" und bezieht sich auf ein doppelseitiges Klebeband. OCA können entweder in Form von Folien geliefert und direkt laminiert werden oder aber initial in flüssigem Zustand vorliegen, wobei sie zunächst beschichtet und aktiviert werden, damit sie aushärten und verkleben, z.B. mit UV-Strahlung, chemischen Substanzen und/oder Wärme.

Die mindestens zwei Folien für die Bildung der Zwischenschichten weisen bevorzugt jeweils unabhängig eine Dicke im Bereich von 0,03 mm bis 0,9 mm, besonders bevorzugt 200 bis 800 µm, auf, wobei es sich bevorzugt um PVB-Folien handelt.

Die Erfindung betrifft ferner ein Verfahren zur Erzeugung einer visuellen Information mit einem Head-up-Display, umfassend die Erzeugung eines Bildes mit einer bildgebenden Einheit, und das Lenken des Bildes auf eine erfindungsgemäße Verbundscheibe wie vorstehend beschrieben als Projektionsfläche, wobei die visuelle Information von dem Raum betrachtet wird, der der Seite der Innenscheibe zugewandt ist.

Durch Einstellen der Transparenz mithilfe des Funktionselements, insbesondere des PDLC-Funktionselements, kann die Menge des durchgelassenen Lichts nach Bedarf reduziert werden. Dadurch wird zum einen ein besserer Kontrast bei der visuellen Information und zum anderen ein besserer Schutz der Privatsphäre ermöglicht.

Head-up-Displays sind dem Fachmann bekannt und umfassen im Allgemeinen eine bildgebende Einheit und einer Projektionsfläche. Die bildgebende Einheit erzeugt das Bild und kann ferner ein Optikmodul, z.B. eine Spiegeloptik, umfassen, die das Bild auf die Projektionsfläche umlenkt.

Die bildgebende Einheit umfasst eine Beleuchtungseinrichtung, die z.B. eine oder mehrere Beleuchtungselemente ausgewählt aus Glühlampen, Gasentladungslampe, Leuchtdioden und/oder Laserlichtquellen sein kann. Entsprechend kann für die Belichtung sichtbares Licht oder Laserlicht verwendet werden.

Die visuelle Information wird von dem Raum betrachtet, die der Innenscheibe der Verbundscheibe zugewandt ist. Dies ist in der Regel ein Innenraum, in dem sich der Betrachter befindet, z.B. ein Fahrzeug-Innenraum.

Bei dem erfindungsgemäßen Verfahren kann die Verbundscheibe in einem Fahrzeug oder einem Bauwerk montiert sein.

Die Erfindung betrifft ferner die Verwendung der erfindungsgemäßen Verbundscheibe wie vorstehend beschrieben als Projektionsfläche für ein Head-up-Display. Bei der Verwendung ist die Verbundscheibe geeigneterweise in einem Fahrzeug oder in einem Bauwerk montiert.

Die erfindungsgemäße Verbundscheibe wie vorstehend beschrieben ist bevorzugt in einem Fahrzeug oder einem Bauwerk montiert. Die Verbundscheibe wird dabei so an das Fahrzeug oder Bauwerk montiert, dass die Innenscheibe dem Innenraum zugewandt ist. Der Innenraum ist der Raum, in dem der Betrachter sich befindet, wenn er die von der Verbundscheibe gezeigte visuelle Information betrachtet.

Die Erfindung betrifft daher auch ein Fahrzeug oder Bauwerk, in dem eine erfindungsgemäße Verbundscheibe wie vorstehend beschrieben montiert ist.

In einer bevorzugten Ausführungsform ist das Fahrzeug oder Bauwerk ein Fahrzeug, das ausgewählt ist aus Kraftfahrzeugen, z.B. Personenkraftfahrzeugen, oder Transportfahrzeugen, wie z.B. Bussen, Zügen, Flugzeugen oder Schiffen.

In einer bevorzugten Ausführungsform ist das Fahrzeug oder Bauwerk ein Bauwerk, wobei die Verbundscheibe als Fensterscheibe oder Trennscheibe montiert ist. Die Trennscheibe kann als Trennwand oder Anzeigeeinrichtung dienen.

In einer bevorzugten Ausführungsform ist die Verbundscheibe eine Heckscheibe, Seitenscheibe, Windschutzscheibe oder Dachscheibe eines Fahrzeuges, insbesondere eines Personenkraftfahrzeugs.

In der Regel ist in das erfindungsgemäße Fahrzeug oder Bauwerk ein Head-up-Display montiert, das eine bildgebende Einheit umfasst, wobei die Verbundscheibe als Projektionsfläche des Head-up-Displays dient.

Die Erfindung wird im Folgenden mithilfe von Ausführungsbeispielen anhand der beigefügten Figuren näher erläutert, welche die Erfindung in keiner Weise einschränken sollen. Die beigefügten Figuren sind schematische Darstellungen und nicht maßstabsgetreu.

Es zeigen:
- Fig. 1: einen Ausschnitt einer Verbundscheibe nach dem Stand der Technik mit einem holographischen Displayelement im Querschnitt,
- Fig. 2: einen Ausschnitt einer Verbundscheibe nach dem Stand der Technik mit einem PDLC-Funktionselement im Querschnitt,
- Fig. 3: einen Ausschnitt einer erfindungsgemäßen Verbundscheibe im Querschnitt.

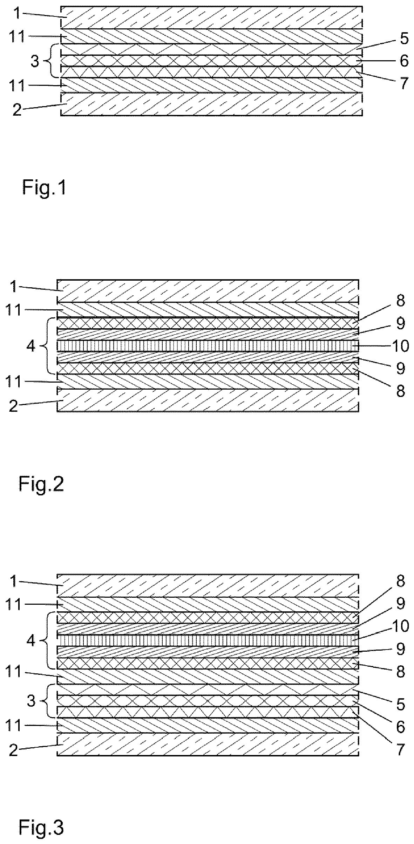

Fig. 1 zeigt eine Verbundscheibe mit holographischem Displayelement 3 nach dem Stand der Technik im Querschnitt. Die Verbundscheibe umfasst eine Außenscheibe 1 und eine Innenscheibe 2, zwischen die ein holographisches Displayelement 3 laminiert ist. Das holographische Displayelement 3 ist in dieser Reihenfolge aus einer Deckschicht 5, einer Photopolymerschicht 6 und eine Substratschicht 7 gebildet.

Die Substratschicht 7 ist z.B. aus PA-Folie oder TAC-Folie gebildet. Die Deckschicht 5 ist z.B. aus PA-Folie, TAC-Folie, PMMA-Folie oder PET-Folie gebildet. Die Substratschicht 7 hat eine Dicke im Bereich von 50 bis 200 µm. Die Photopolymerschicht 6 hat eine Dicke im Bereich von 10 bis 80 µm. Die Deckschicht 5 hat eine Dicke im Bereich von 50 bis 250 µm.

Zwischen der Außenscheibe 1 und dem holographischem Displayelement 3 sowie zwischen der Innenscheibe 2 und dem holographischem Displayelement 3 sind jeweils eine Zwischenschicht 11 angeordnet, die die Scheiben verkleben bzw. verbinden. Die Zwischenschichten sind bevorzugt PVB-Folien, die z.B. eine Dicke im Bereich von 200 bis 800 µm aufweisen.

Fig. 2 zeigt eine Verbundscheibe mit elektrisch steuerbaren optischen Eigenschaften nach dem Stand der Technik im Querschnitt. Die Verbundscheibe umfasst eine Außenscheibe 1 und eine Innenscheibe 2, zwischen die ein PDLC-Funktionselement 4 laminiert ist. Das PDLC-Funktionselement ist in dieser Reihenfolge aus einer Trägerschicht 8, einer Flächenelektrode 9, einer aktiven PDLC-Schicht 10, einer Flächenelektrode 9 und einer Trägerschicht 8 gebildet.

Die Trägerschichten 8 sind aus PET-Folien gebildet und weisen z.B. eine Dicke im Bereich von 100 bis 200 µm auf. Die Flächenelektroden 9 sind aus ITO gebildet und weisen z.B. eine Dicke im Bereich von 30 bis 400 nm auf. Die aktive Schicht 10 hat z.B. eine Dicke im Bereich von 10 bis 30 µm.

Zwischen der Außenscheibe 1 und dem PDLC-Element 4 sowie zwischen der Innenscheibe 2 und dem PDLC-Element 4 sind jeweils eine Zwischenschicht 11 angeordnet, die die Scheiben verkleben bzw. verbinden. Die Zwischenschichten sind bevorzugt PVB-Folien, die z.B. eine Dicke im Bereich von 200 bis 800 µm aufweisen.

Fig. 3 zeigt einen Ausschnitt einer erfindungsgemäßen Verbundscheibe im Querschnitt, die eine Kombination von PDLC-Film und holografischem Film in Glas aufweist. Die Verbundscheibe ist als Projektionsfläche für ein holographisches Head-up-Display (HUD) geeignet. Die Verbundscheibe kann z.B. als Windschutzscheibe eines Automobils eingesetzt werden.

Die erfindungsgemäße Verbundscheibe umfasst in dieser Reihenfolge eine Außenscheibe 1, eine Zwischenschicht 11, ein PDLC-Funktionselement 4 mit elektrisch steuerbaren optischen Eigenschaften, eine Zwischenschicht 11, ein holographisches Displayelement 3, eine Zwischenschicht 11 und eine Innenscheibe 2. In einer Ausführungsform ist die Außenscheibe 1 grün und die Innenscheibe 2 weiß. Beide Scheiben 1 und 2 sind transparent.

Das PDLC-Funktionselement 4 ist in dieser Reihenfolge aus einer Trägerschicht 8, einer Flächenelektrode 9, einer aktiven PDLC-Schicht 10, einer Flächenelektrode 9 und einer Trägerschicht 8 gebildet. Die Trägerschichten 8 sind aus PET-Folien gebildet und weisen z.B. eine Dicke im Bereich von 100 bis 200 µm auf. Die Flächenelektroden 9 sind aus ITO gebildet und weisen z.B. eine Dicke im Bereich von 30 bis 400 nm auf. Die aktive Schicht 10 hat z.B. eine Dicke im Bereich von 10 bis 30 µm.

Das holographische Displayelement 3 ist in dieser Reihenfolge aus einer Deckschicht 5, einer Photopolymerschicht 6 und einer Substratschicht 7 gebildet. Die Substratschicht 7 ist z.B. aus PA-Folie oder TAC-Folie gebildet. Die Deckschicht 5 ist z.B. aus PA-Folie, TAC-Folie, PMMA-Folie oder PET-Folie gebildet. Die Substratschicht 7 hat eine Dicke im Bereich von 50 bis 200 µm. Die Photopolymerschicht 6 hat eine Dicke im Bereich von 10 bis 80 µm. Die Deckschicht 5 hat eine Dicke im Bereich von 50 bis 250 µm.

Zwischen der Außenscheibe 1 und dem PDLC-Element 4, zwischen der Innenscheibe 2 und dem holographisches Displayelement 3 sowie zwischen PDLC-Element 4 und holographisches Displayelement 3 sind jeweils eine Zwischenschicht 11 angeordnet, die die Scheiben und die Elemente 3 und 4 verkleben bzw. verbinden. Die Zwischenschichten sind bevorzugt PVB-Folien, die z.B. eine Dicke im Bereich von 200 bis 800 µm aufweisen.

### Bezugszeichenliste

- 1: Außenscheibe
- 2: Innenscheibe
- 3: holographisches Displayelement
- 4: Funktionselement mit elektrisch regelbaren optischen Eigenschaften, z.B. PDLC
- 5: Deckschicht des holographischen Displayelements
- 6: Photopolymerschicht des holographischen Displayelements
- 7: Substratschicht des holographischen Displayelements
- 8: Trägerschicht des Funktionselements
- 9: Flächenelektrode des Funktionselements
- 10: aktive Schicht des Funktionselements
- 11: Zwischenschicht

## Patentansprüche

1. Verbundscheibe, umfassend in dieser Reihenfolge
eine Außenscheibe (1),
eine Zwischenschicht (11),
ein Funktionselement (4) mit elektrisch steuerbaren optischen Eigenschaften, das ausgewählt ist aus einem PDLC-Funktionselement, einem PNLC-Funktionselement oder einem SPD-Funktionselement,
eine Zwischenschicht (11),
ein holographisches Displayelement (3),
eine Zwischenschicht (11) und
eine Innenscheibe (2).

2. Verbundscheibe nach Anspruch 1, wobei das holographische Displayelement (3) in dieser Reihenfolge eine Deckschicht (5), eine Photopolymerschicht (6) und eine Substratschicht (7) umfasst.

3. Verbundscheibe nach Anspruch 1 oder 2, wobei das Funktionselement (4) in dieser Reihenfolge eine Trägerschicht (8), eine Flächenelektrode (9), eine aktive Schicht (10), eine Flächenelektrode (9) und eine Trägerschicht (8) umfasst.

4. Verbundscheibe nach einem der Ansprüche 1 bis 3, wobei das Funktionselement (4) ein PDLC-Funktionselement ist.

5. Verbundscheibe nach einem der Ansprüche 1 bis 4, wobei
die Substratschicht (7) des holographischen Displayelements (3) aus Polyamid (PA)-Folie oder Cellulosetriacetat (TAC)-Folie gebildet ist, und/oder die Deckschicht (5) des holographischen Displayelements (3) aus Polyamid (PA)-Folie, Cellulosetriacetat (TAC)-Folie, Polymethylmethacrylat (PMMA)-Folie oder Polyethylenterephthalat (PET)-Folie gebildet ist.

6. Verbundscheibe nach einem der Ansprüche 1 bis 5, wobei
die Zwischenschichten (11) aus Polyvinylbutyral (PVB)-Folie, thermoplastischer Polyurethan (TPU)-Folie, Ethylen-Vinylacetat-Copolymer (EVA)-Folie, OCA-Folie oder einer Kombination davon gebildet sind.

7. Verbundscheibe nach einem der Ansprüche 1 bis 6, wobei
in dem holographischen Displayelement (3) die Substratschicht eine Dicke im Bereich von 50 bis 200 µm, die Photopolymerschicht (6) eine Dicke im Bereich von 10 bis 80 µm und/oder die Deckschicht (5) eine Dicke im Bereich von 50 bis 250 µm aufweist, und/oder
in dem Funktionselement (4) die Trägerschichten (8) jeweils unabhängig eine Dicke im Bereich von 100 bis 200 µm, die Flächenelektroden (9) jeweils unabhängig eine Dicke im Bereich von 30 bis 400 nm und/oder die aktive Schicht (10) eine Dicke im Bereich von 10 bis 30 µm aufweist, und/oder
die Zwischenschichten (11) jeweils unabhängig eine Dicke im Bereich von 200 bis 800 µm aufweisen.

8. Verbundscheibe nach einem der Ansprüche 1 bis 7, wobei in dem Funktionselement (4), bevorzugt in dem PDLC-Funktionselement,
die Trägerschichten (8) aus Polyethylenterephthalat (PET)-Folie gebildet sind, und/oder
die Flächenelektroden (9) aus ITO-Schichten gebildet sind.

9. Verfahren zur Erzeugung einer visuellen Information mit einem Head-up-Display, umfassend die Erzeugung eines Bildes mit einer bildgebenden Einheit, und das Lenken des Bildes auf eine Verbundscheibe nach einem der Ansprüche 1 bis 8 als Projektionsfläche, wobei die visuelle Information von dem Raum betrachtet wird, der der Seite der Innenscheibe zugewandt ist, wobei die Verbundscheibe bevorzugt in einem Fahrzeug oder einem Bauwerk montiert ist.

10. Verwendung der Verbundscheibe nach einem der Ansprüche 1 bis 8 als Projektionsfläche für ein Head-up-Display.

11. Verwendung nach Anspruch 10, wobei die Verbundscheibe in einem Fahrzeug oder in einem Bauwerk montiert ist.

12. Fahrzeug oder Bauwerk, in dem eine Verbundscheibe nach einem der Ansprüche 1 bis 8 montiert ist.

13. Fahrzeug oder Bauwerk nach Anspruch 12,
das ein Fahrzeug ausgewählt aus Kraftfahrzeugen, z.B. Personenkraftfahrzeugen, oder Transportfahrzeugen, wie z.B. Bussen, Zügen, Flugzeugen oder Schiffen, ist, oder
das ein Bauwerk ist, wobei die Verbundscheibe als Fensterscheibe oder Trennscheibe montiert ist.

14. Fahrzeug oder Bauwerk nach Anspruch 12 oder 13, wobei die Verbundscheibe eine Heckscheibe, Seitenscheibe, Windschutzscheibe oder Dachscheibe eines Fahrzeuges ist.

15. Fahrzeug oder Bauwerk nach einem der Ansprüche 12 bis 14, in dem ein Head-up-Display montiert ist, das eine bildgebende Einheit umfasst, wobei die Verbundscheibe als Projektionsfläche des Head-up-Displays dient.

## Claims

1. Laminated pane, comprising, in this order,
an outer pane (1),
an intermediate layer (11),
a functional element (4) with electrically controllable optical properties that is selected from among a PDLC functional element, a PNLC functional element, or an SPD functional element,
an intermediate layer (11),
a holographic display element (3),
an intermediate layer (11), and
an inner pane (2).

2. Laminated pane according to claim 1, wherein the holographic display element (3) comprises, in this order, a cover layer (5), a photopolymer layer (6), and a substrate layer (7).

3. Laminated pane according to claim 1 or 2, wherein the functional element (4) comprises, in this order, a carrier layer (8), a surface electrode (9), an active layer (10), a surface electrode (9), and a carrier layer (8).

4. Laminated pane according to one of claims 1 through 3, wherein the functional element (4) is a PDLC functional element.

5. Laminated pane according to one of claims 1 through 4, wherein the substrate layer (7) of the holographic display element (3) is formed from polyamide (PA) film or cellulose triacetate (TAC) film, and/or the cover layer (5) of the holographic display element (3) is formed from polyamide (PA) film, cellulose triacetate (TAC) film, polymethyl methacrylate (PMMA) film, or polyethylene terephthalate (PET) film.

6. Laminated pane according to one of claims 1 through 5, wherein the intermediate layers (11) are formed from polyvinyl butyral (PVB) film, thermoplastic polyurethane (TPU) film, ethylene vinyl acetate copolymer (EVA) film, OCA film, or a combination thereof.

7. Laminated pane according to one of claims 1 through 6, wherein in the holographic display element (3), the substrate layer has a thickness in the range from 50 to 200 µm, the photopolymer layer (6) has a thickness in the range from 10 to 80 µm, and/or the cover layer (5) has a thickness in the range from 50 to 250 µm, and/or in the functional element (4), the carrier layers (8) have, independently in each case, a thickness in the range from 100 to 200 µm, the surface electrodes (9) have, independently in each case, a thickness in the range from 30 to 400 nm, and/or the active layer (10) has a thickness in the range from 10 to 30 µm, and/or the intermediate layers (11) have, independently in each case, a thickness in the range from 200 to 800 µm.

8. Laminated pane according to one of claims 1 through 7, wherein in the functional element (4), preferably in the PDLC functional element, the carrier layers (8) are formed from polyethylene terephthalate (PET) film, and/or the surface electrodes (9) are formed from ITO layers.

9. Method for generating visual information with a head-up display, comprising generating an image with an imaging unit, and directing the image onto a laminated pane according to one of claims 1 through 8 as a projection surface, wherein the visual information is viewed from the space that faces the side of the inner pane, wherein the laminated pane is preferably mounted in a vehicle or a structure.

10. Use of the laminated pane according to one of claims 1 through 8 as a projection surface for a head-up display.

11. Use according to claim 10, wherein the laminated pane is mounted in a vehicle or in a structure.

12. Vehicle or structure, in which a laminated pane according to one of claims 1 through 8 is mounted.

13. Vehicle or structure according to claim 12, that is a vehicle selected from among motor vehicles, e.g., passenger cars, or transport vehicles, e.g., buses, trains, aircraft, or watercraft, or that is a structure wherein the laminated pane is mounted as a window pane or a separating pane.

14. Vehicle or structure according to claim 12 or 13, wherein the laminated pane is a rear window, side window, windshield or roof panel of a vehicle.

15. Vehicle or structure according to one of claims 12 through 14, in which a head-up display is mounted that comprises an imaging unit, wherein the laminated pane serves as a projection surface of the head-up display.

## Revendications

1. Vitre laminée comprenant, dans l'ordre,
une vitre extérieure (1),
une couche intermédiaire (11),
un élément fonctionnel (4) aux propriétés optiques contrôlables électriquement, choisi parmi un élément fonctionnel PDLC, un élément fonctionnel PNLC ou un élément fonctionnel SPD,
une couche intermédiaire (11),
un élément d'affichage holographique (3),
une couche intermédiaire (11), et
une vitre intérieure (2).

2. Vitre laminée selon la revendication 1, dans laquelle l'élément d'affichage holographique (3) comprend, dans l'ordre, une couche de couverture (5), une couche photopolymère (6) et une couche de substrat (7).

3. Vitre laminée selon la revendication 1 ou 2, dans laquelle l'élément fonctionnel (4) comprend, dans l'ordre, une couche de support (8), une électrode de surface (9), une couche active (10), une électrode de surface (9) et une couche de support (8).

4. Vitre laminée selon l'une des revendications 1 à 3, dans lequel l'élément fonctionnel (4) est un élément fonctionnel PDLC.

5. Vitre laminée selon l'une des revendications 1 à 4, dans laquelle la couche de substrat (7) de l'élément d'affichage holographique (3) est formée d'un film de polyamide (PA) ou de triacétate de cellulose (TAC), et/ou la couche de couverture (5) de l'élément d'affichage holographique (3) est formée d'un film de polyamide (PA), de triacétate de cellulose (TAC), de polyméthacrylate de méthyle (PMMA) ou de polyéthylène téréphtalate (PET).

6. Vitre laminée selon l'une des revendications 1 à 5, dans lequel les couches intermédiaires (11) sont formées d'un film de butyral de polyvinyle (PVB), d'un film de polyuréthane thermoplastique (TPU), d'un film de copolymère d'éthylène-acétate de vinyle (EVA), d'un film OCA ou d'une combinaison de ceux-ci.

7. Vitre laminée selon l'une des revendications 1 à 6, dans laquelle, dans l'élément d'affichage holographique (3), la couche de substrat a une épaisseur comprise entre 50 et 200 µm, la couche photopolymère (6) a une épaisseur comprise entre 10 et 80 µm, et/ou la couche de couverture (5) a une épaisseur comprise entre 50 et 250 µm, et/ou dans l'élément fonctionnel (4), les couches de support (8) ont, indépendamment dans chaque cas, une épaisseur comprise entre 10 et 80 µm, et/ou la couche de couverture (5) a une épaisseur comprise entre 50 et 250 µm, et/ou dans l'élément fonctionnel (4), les couches de support (8) ont, indépendamment dans chaque cas, une épaisseur comprise entre 10 et 80 µm, indépendamment dans chaque cas, une épaisseur comprise entre 100 et 200 µm, les électrodes de surface (9) ont, indépendamment dans chaque cas, une épaisseur comprise entre 30 et 400 nm, et/ou la couche active (10) a une épaisseur comprise entre 10 et 30 µm, et/ou les couches intermédiaires (11) ont, indépendamment dans chaque cas, une épaisseur comprise entre 200 et 800 µm.

8. Vitre laminée selon l'une des revendications 1 à 7, dans lequel, dans l'élément fonctionnel (4), de préférence dans l'élément fonctionnel PDLC, les couches porteuses (8) sont formées d'un film de polyéthylène téréphtalate (PET), et/ou les électrodes de surface (9) sont formées de couches d'ITO.

9. Méthode de génération d'informations visuelles avec un affichage tête haute, comprenant la génération d'une image avec une unité d'imagerie, et l'orientation de l'image sur une vitre laminée selon l'une des revendications 1 à 8 en tant que surface de projection, dans laquelle les informations visuelles sont vues depuis l'espace qui fait face au côté de la vitre intérieure, la vitre laminée étant de préférence montée dans un véhicule ou une structure.

10. Utilisation de la vitre laminée selon l'une des revendications 1 à 8 comme surface de projection pour un affichage tête haute.

11. Utilisation selon la revendication 10, dans laquelle la vitre laminée est montée dans un véhicule ou une structure.

12. Véhicule ou structure dans lequel est monté une vitre laminée selon l'une des revendications 1 à 8.

13. Véhicule ou structure selon la revendication 12, qui est un véhicule choisi parmi les véhicules à moteur, par exemple les voitures particulières, ou les véhicules de transport, par exemple les autobus, les trains, les avions ou les bateaux, ou qui est une structure dans laquelle la vitre laminée est montée comme vitre de fenêtre ou comme vitre de séparation.

14. Véhicule ou structure selon la revendication 12 ou 13, dans lequel la vitre laminée est une vitre arrière, une vitre latérale, un pare-brise ou un panneau de toit d'un véhicule.

15. Véhicule ou structure selon l'une des revendications 12 à 14, dans lequel est monté un affichage tête haute comprenant une unité d'imagerie, dans lequel la vitre laminée sert de surface de projection de l'affichage tête haute.
